# EUROPEAN PATENT APPLICATION

(11) **EP 0 994 616 A2**
(43) Date of publication of application: **19.04.2000**
(21) Application number: 99116599.4
(22) Date of filing: 25.08.1999
(51) Int. Cl.: H04M 7/00, H04M 3/42

(54) **Apparatus and method for providing enhanced supplementary services in telephony-over-lan-systems**

(30) Priority: 16.10.1998 US 174070
(71) Applicant: Siemens Information and Communication Networks Inc., Boca Raton, FL 33487 (US)
(72) Inventor: Shaffer, Shmuel, Palo Alto, CA 94301 (US); Beyda, William, Cupertino, CA 95014 (US); Korpi, Markku J., 82319 Starnberg (DE)
(74) Representative: Allen, Derek

(57) **Abstract**

The present invention provides an auxiliary feature server (360) that allows communication devices operating different communication software versions to communicate with each other and to fully utilize their full set of communication functions, thereby avoiding the downgrading of functions to accommodate a communication device with fewer supported functions. In one specific embodiment, an auxiliary feature server (360) is coupled to a first endpoint (354) and a second endpoint (356) though a network. The first endpoint (354) operates with a first communication protocol version supporting a selected function, and the second endpoint (356) operates with a second communication protocol version not supporting the selected function. The auxiliary feature server (360) is forwarded and processes the call signaling associated with the selected function to enable compatible communications between the first and second endpoints. The auxiliary feature server breaks down the call signaling into basic signaling elements recognized by the first communication protocol version so that the selected function is substantially performed.

## Description

### BACKGROUND OF THE INVENTION

The present invention relates generally to computer and communication systems. More specifically, the present invention relates to communications over a computer network, such as a local area network (LAN).

Computer networks historically were used merely to carry data between separate computing devices. In recent years, computer networks have been used to perform many functions and are now used to carry computer data, video, audio and telephony information.

While the increased use of computer networks to facilitate many different types of communications have brought about vast improvements in the way people communicate, the advances have not been totally flawless. For example, users wishing to communicate over the computer networks typically must use similar, if not the same, types of communication devices. Generally, the communication devices are Internet Protocol (IP) phones or computers with specialized communication software. However, it has become increasingly difficult for users to communicate over a network without using the same version of a particular piece of communication software. Different versions of the same piece of software may exist at any one time on a network, especially because such client software is usually fairly economical or even free (e.g., bundled in a new computer or as part of a software suite upgrade) and easily upgraded by users. Oftentimes, the software upgrades will contain new features and/or capabilities at a more reasonable cost compared to the significant investment cost of obtaining such new features by purchasing or upgrading certain communication devices such as gatekeepers or gateways that are used in the networks. Thus, different versions of communication software, which allow people to communicate over a computer network, have proliferated. Unfortunately, the different versions of communication software are oftentimes partially, or totally, incompatible with each other. Therefore, certain users having one version of software are allowed the ability to perform extra functions while other users with older or different versions of software are limited. In extreme cases, users with different versions of the same piece of software are not able to communicate with each other at all.

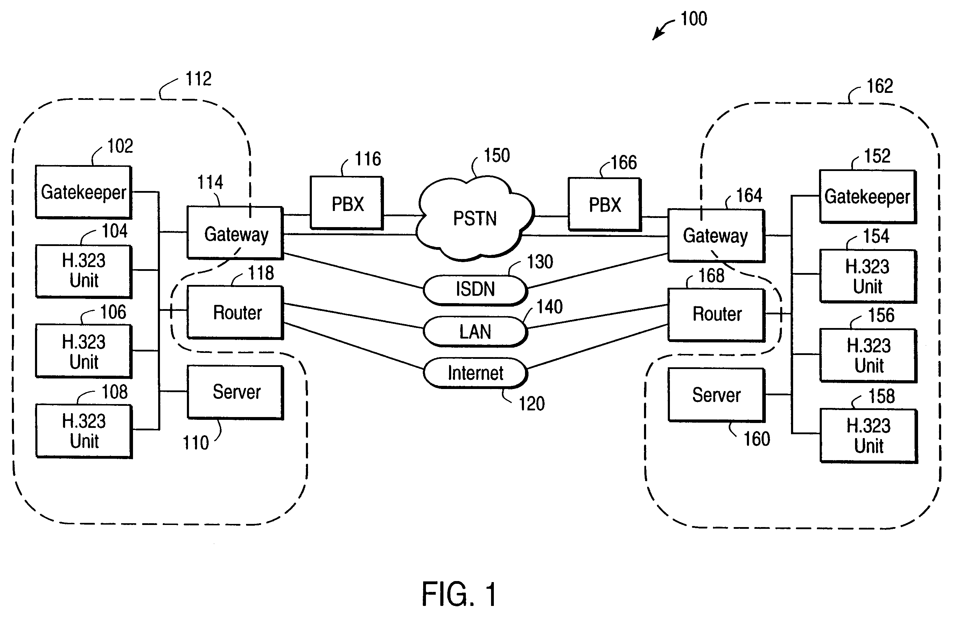

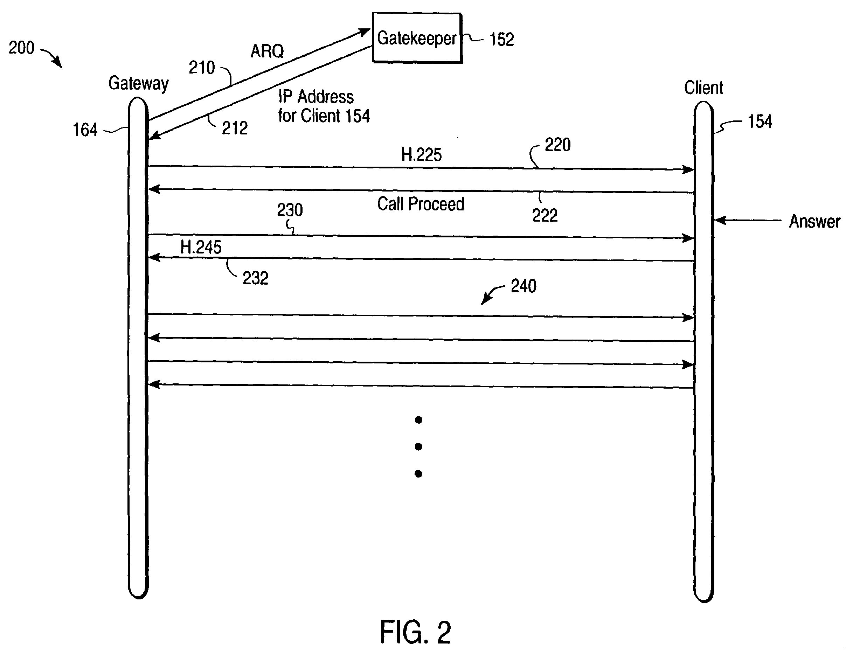

Figs. 1 and 2 are examples that more specifically illustrate at least the types of problems described above. Fig. 1 is a functional, logical diagram that illustrates an example of a modem computer network 100 used to facilitate communication, including telephony-over-LAN (T0L) communication, between users. Computer network 100 includes two communication zones 112 and 162. The communication zones 112 and 162 may be connected to each other through any one of a number of types of computer and communication networks. For example, communication zones 112 and 162 are connected through the Internet 120, an integrated services digital network (ISDN) 130, a local area network (LAN) 140, and the public switched telephone network (PSTN) 150. The communication zones 112 and 162 may then be able to exchange data with each other through the different networks (120, 130, 140 and/or 150). Communication zones 112 and 162 include a number of communication or computing devices. In the illustrated example, communication zone 112 includes a gatekeeper 102; communication devices 104, 106 and 108; a server 110; and a logical portion of a gateway 114 coupled to PSTN 150 and/or to ISDN 130. A router 118 coupled to LAN 140 and/or to Internet 120 also is an entity of the network. Gateway 114 can also be coupled to a private branch exchange (PBX) 116 that is coupled to PSTN 150. Similarly, communication zone 162 includes a gatekeeper 152; communication devices 154, 156 and 158; a server 160; and a logical portion of a gateway 164 coupled to PSTN 150 and/or to ISDN 130. A router 168 coupled to LAN 140 and/or to Internet 120 is also an entity of the network. Gateway 164 can also be coupled to a PBX 166 that is coupled to PSTN 150. Communication devices 104, 106, 108, 110, 154, 156, 158 and 160 may be a telephone that is capable of network communications, a computer with telephony capabilities, or the like. Calls entering the system 100 from a non-ToL system such as a PBX, JSDN, or PSTN come through a gateway that facilitates communication to and from the communication zone. Calls from a LAN or the Internet come through a router functionality that facilitates communication to and from the communication zone. Gatekeeper 102 typically serves to facilitate communication with communication devices 104, 106 and 108 belonging to communication zone 112; whereas, gatekeeper 152 typically serves to facilitate communication with communication devices 154, 156 and 158 belonging to communication zone 162. Each gatekeeper generally contains information about respective communication devices, and other networks and communication zones to which its respective communication zone is connected. That is, the client devices interact with their respective gatekeeper to enforce policy, provide address resolution, and provide necessary features. Although Fig. 1 includes gatekeepers, some systems do not include gatekeepers and operate with direct signaling going from endpoint (such as a client or a gateway) to endpoint without going through any gatekeeper.

In the illustrated example, the entities 104, 106, 108, 154, 156 and 158 are communication devices, such as computers or IP telephones, that implement the same type of communication software compliant with the H.323 communication standard in order to communicate with each other. However, the communication devices may not be operating the same version of the communication software, which may hamper communication between the devices. These modem ToL systems typically utilize H.323 signaling for call setup. In particular, the clients, gatekeepers and gateways all use H.323 call setup functions to connect to each other. The H.323 communication protocol also provides for various types of supplementary services through H.450 (e.g., H.450.1 allows for a pipe to be built through which signaling can be tunneled Through the network, H.450.2 and 450.3 provide functions like call transfer and call forward). In a ToL network, the different versions of H.323 (and H.450.N, with N growing increasingly larger as the protocol evolves to provide for additional supplementary services) that a gateway, gatekeeper and clients support result in protocol mismatches that reduce the performance and effectiveness of the system.

An example of the problem with software version mismatches is demonstrated with respect to Fig. 1. As mentioned earlier, clients and gatekeepers are more easily able to migrate faster to newer versions of communication software by way of software upgrades. However, upgrading communication software on gateways involves taking the gateway out of service, which results in communications to/from e.g., the PSTN or ISDN being interrupted. Further, typically gateways include embedded communication software, and replacing this embedded software in a gateway can be time consuming with a correspondingly long shutdown in trunk service for all clients serviced by the gateway. In this specific example, a client 154 operates a newer version of communication software, e.g., H.323 and H.450. l/2/3/X where H.450.X supports a new feature that is not supported by an older version of communication software, e.g., H.323 and H.450.l/2/3, operating on the gateway 164. The present example refers to a client 108 in communication zone 112 making a call via, e.g., the PSTN 150 in order to communicate with client 154 in communication zone 162. When gateway 164 receives the outside call from PSTN 150, gateway 164 establishes a first call connection to client 154 and then the call proceeds between the user at client 108 and the user at client 154. If during this call client 154 tries to invoke the new feature supported by H.450.X and gateway 164 is only H.450.1/2/3 enabled, then gateway 164, upon receipt of any call signaling commands that it does not support, normally would ignore the unrecognized call signaling commands, reject the unrecognized call signaling commands, and/or altogether drop the first call connection to client 154. Thus, the end user of client 154 would be unable to use its supported new feature or worse lose its call connection, due to the different versions of software supported by client 154 and gateway 164.

Conventional systems avoid these types of problem by forcing clients to operate with the oldest communication software version. Fig. 2 illustrates an example of this conventional process in a system which includes a gatekeeper, a first endpoint (e.g., a gateway 164) that operates on an older version of communication software that does not support a new feature, and a second endpoint (e.g., a client 154) that operates on a newer version of communication software that does support the new feature. When gateway 164 receives an incoming phone call from PSTN 150, gateway 164 initially sends a request 210 to gatekeeper 152 in order to begin communicating with client 154. Request 210 from gateway 164 requests gatekeeper 152 to provide it with information about the address of client 154. Gatekeeper 152 replies with a response 212 that includes at least the Internet Protocol (IP) address for client 154. Now that gateway 164 has the IP address (analogous to a telephone number) for client 154, gateway 164 attempts to communicate with client 154 through an H.225 connect request 220. Once client 154 receives connect request 220, client 154 may return a "call proceeding" signal 222. The "call proceeding" signal 222 informs gateway 164 that the connect request has been received and that client 154 is waiting for the gateway to complete the connection.

As seen in Fig. 2, once the user of client 154 has answered, an exchange of H.245 communications 230 and 232 is initiated. Generally, H.245 communications 230 and 232 exchange information about the respective capabilities of gateway 164 and of client 154. For example, gateway 164 and client 154 will agree upon the bandwidth at which they will communicate. Also, if compression is to be used the type of compression algorithm that will be used is decided. Further, a number of other factors are also decided during H.245 communication, such as quality, error correction, video compression if any video is involved, and other factors. During H.245 communications 230 and 232, gateway 164 and client 154 determine what version of the communication software they are each operating. In the conventional system, if gateway 164 has an older version of software with fewer functions than the version of software client 154 is implementing, gateway 164 and client 154 will agree to communicate operating the older version of the communication software. Thus, client 154, despite its extended capabilities from the newer version of communication software, is limited to using only the limited set of functions or features available with the older version of the communication software. A similar process as described above would occur between any two endpoints which operate different versions of communication software.

As seen above, typically the oldest version of the communication software that any one client is operating is chosen in order to allow both clients to communicate satisfactorily. However, the disadvantage is that the extra functions and/or capabilities of the client operating the newer software version that provides these extra functions and/or capabilities are now made inoperable due to the agreed requirement of backward software compatibility. Referring back to Fig. 2, gateway 164 and client 154 begin to communicate through several communication exchanges 240. However, these communication exchanges 240 are limited to those recognized communication exchanges within the truncated group of functions to which client 154 is now limited. As previously mentioned, in situations where the gateway 164 does not support the new feature function that is supported by client 154, then that new feature function would not be executed and the call might be disconnected, unless the communication exchanges 240 are duly limited to commonly recognized communications associated with the oldest version of communication software used by these endpoints.

What is desired is the ability to allow two endpoints operating two different versions of a particular piece of communication software to be able to communicate with each other satisfactorily, while at the same time allowing both endpoints to fully utilize their particular versions of the communication software.

### SUMMARY OF THE INVENTION

According to a specific embodiment, the present invention provides an auxiliary feature server for facilitating communication between a first endpoint and a second endpoint. The auxiliary feature server, the first endpoint and the second endpoint are in logical communication through a network. The first endpoint operates with a first communication protocol version, and the second endpoint operates with a second communication protocol version. The second communication protocol version provides capability for at least one additional feature that the first communication protocol version does not support. The auxiliary feature server processes only the call signaling associated with the additional feature(s) to provide compatible communications between the first and second endpoints by breaking down the call signaling into basic elements recognized by the first communication protocol version.

According to another specific embodiment, the present invention provides a communication network that includes a first endpoint operating a first communication protocol version, a second endpoint operating a second communication protocol version, and an auxiliary feature server communicatively coupled to the first and second endpoints. The second communication protocol version supports a selected function not supported by the first communication protocol version. The auxiliary feature server receives and processes only unrecognized call signaling associated with the selected function to allow the first and second endpoints to communicate to substantially complete the selected function. The first endpoint includes a module that recognizes and causes only the unrecognized call signaling to be forwarded to the auxiliary feature server for breakdown into basic elements such that the first and second endpoints exchange communications according to the selected function.

A further understanding of the nature and advantages of these and other specific embodiments of the present invention may be realized by reference to the specification and the drawings.

### BRIEF DESCRIPTION OF THE DRAWINGS

Fig. 1 is a functional, logical diagram that illustrates an exemplary computer network used to facilitate communication between users.
Fig. 2 illustrates an exemplary process of two endpoint communication devices in a conventional system attempting to communicate with each other.
Fig. 3 is a functional, logical diagram that illustrates an exemplary communication network in accordance with an embodiment of the present invention.
Fig. 4 illustrates a communication process for transferring in accordance with specific embodiments of the present invention.

### DETAILED DESCRIPTION OF SPECIFIC EMBODIMENTS

The present invention provides methods and apparatus for allowing two endpoint communication devices operating different versions of communication software to communicate with each other. The present invention allows the endpoint communication devices to fully utilize all the functions of their respective versions of communication software. In addition, the present invention provides the ability for an endpoint (e.g., a gateway) to defer to the auxiliary feature server for provision of unknown features and unknown signaling. The present invention enables new features to be handled for network-wide implementation without upgrading all of the network entities (especially an expensive upgrade or replacement of the possibly multiple gateways in a network, where this replacement results in shutdown of service at the gateway being replaced).

In addition, a specific embodiment of the present invention provides efficient network communication by passing only the unrecognized call signaling (for supplementary services) associated with a selected function to an auxiliary feature server that processes the call signaling, while the call data stream is transmitted between two communication devices without passing through the auxiliary feature server. Thus, the auxiliary feature server enables effective utilization of the system bandwidth to prevent bottlenecks in network traffic.

According to a specific embodiment of the present invention, an auxiliary feature server is used to act as a signaling mediator between endpoints such as communication devices, gateways or clients, operating slightly or completely incompatible communication protocols. The auxiliary feature server receives and translates unrecognized call signaling between endpoints to ensure proper communications between the endpoints. If, for example, a first client or gateway is not capable of certain types of communications or functions, the auxiliary feature server may emulate the necessary signaling for the first client or gateway such that a second client is capable of utilizing all of its functions supported by its newer version of communication software. The auxiliary feature server provides cross version, application and platform compatibility. The auxiliary feature server also provides features requiring coordination of signaling to multiple destinations (e.g., transfer operation) as discussed further below.

The illustrated embodiments of the present invention are discussed in further detail in reference to the H.323 communication protocol standard. Further other protocols related to the H.323 standard, for example, H.225.O, H.245, H.450.l, H.450.2 and H.450.3 are also discussed in reference to the illustrated embodiments of the invention.

The H.323, H.225.O, H.245 and H.450.X series communication protocols are incorporated by reference herein in their entirety, including all currently published versions of the standards. The standards may be obtained from the International Telecommunication Union (ITU). While the illustrated embodiments focus on the H.323 standard and its related standards, the present invention is not necessarily limited to those specific standards. Any suitable communication protocol used to allow communication devices to communicate with each other through a computer network may utilize the present invention. For example, internetworking between H.323 and International Standards Organization (ISO) QSIG (Q signaling), the Internet Engineering Task Force (IETF) draft standard Session Initiation Protocol (SIP) and other types of communication protocols may be utilized in accordance with some embodiments of the present invention.

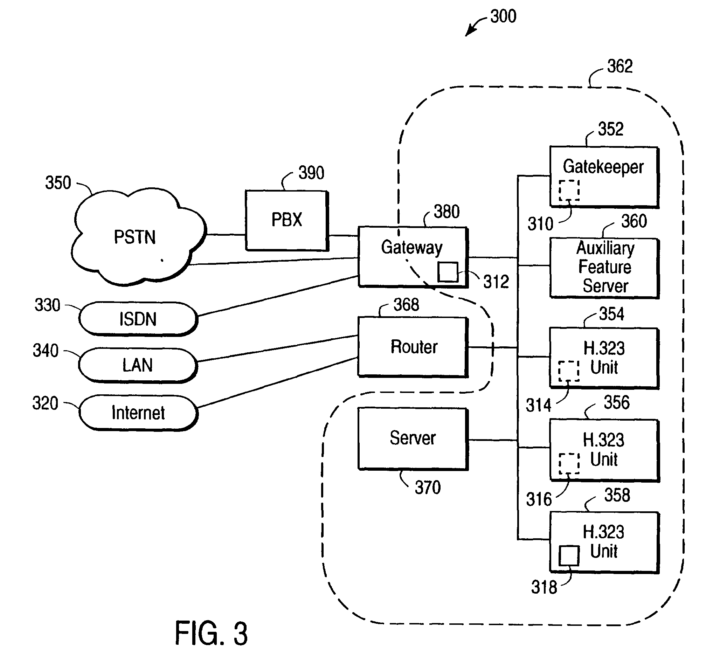

Fig. 3 is a functional, logical diagram that illustrates an exemplary communication network 300 in accordance with an embodiment of the present invention. Communication network 300 includes a communication zone 362 that may be coupled to a variety of networks, including but not limited to the Internet 320, an ISDN 330, a local area network 340, and the PSTN 350. Through these networks 320, 330, 340 and 350, communication zone 362 may be able to further communicate with other networks and communication zones connected thereto.

Included in communication zone 362 are a gatekeeper 352, an auxiliary feature server 360, a server 370, a logical portion of a gateway 380, and communication devices 354, 356 and 358. Communication devices 354, 356 and 358 may be any suitable type of communication devices capable of communicating through a network. By way of example, the communication devices may be telephones capable of network communications, computers with audio and/or visual communication capabilities, videophones, or the like. Gateway 380 is coupled to ISDN 330 and to PSTN 350 directly as well as through a PBX 390. A router 368 is coupled to local area network 340 and to the Internet 320. As exemplary network 300 is similar in structure to parts of network 100 described above, many aspects of the earlier description of network 100 will be applicable to network 300 as well. However, unlike network 100, network 300 includes different or additional aspects shown in Fig. 3, as herein described.

According to a specific embodiment, auxiliary feature server 360 acts as a signaling mediator between endpoints operating slightly or completely incompatible communication protocols. Auxiliary feature server 360 receives and translates unrecognized call signaling between endpoints (e.g., clients 354 and 358) to ensure proper communications between them. For example, if client 358 is not capable of certain types of communications or functions for which client 354 has the capability, auxiliary feature server 360 may emulate the necessary signaling for client 358 such that client 354 is capable of utilizing all of its functions.

According to the specific embodiment, the present invention provides for modules, also referred to as "unknown feature service provider (UFSP)" modules, that are installed in network entities such as endpoints like gateway 380 (installed with UFSP module 312) and client 358 (installed with UFSP module 318). When a particular endpoint (e.g., client 354) is capable of and thus initiates a new feature to send call signaling associated with this new feature to another endpoint (e.g., client 358) that operates an older communication software version and does not recognize such signaling, client 358 upon receipt of this unknown protocol element (i.e., the unrecognized call signaling) passes the unknown protocol element to its UFSP module 318. Within each UFSP module, a configurable address exists that points to the auxiliary feature server 360. The module 318 in client 358 then passes the unknown protocol element through the network to auxiliary feature server 360. Auxiliary feature server 360 then breaks down the unknown protocol element into its various recognized elements to enable the new feature to be implemented or at least approximated. Thus, many new features not supported on an endpoint can be ported to an auxiliary feature server. It should be noted that the above general description in the context of client 358/module 318 also applies for other endpoints like gateway 380/module 312, as described further below.

The installation of these UFSP modules in an endpoint(s) provides fast deployment of the capability to handle new features and reduces the urgency to replace/upgrade each gateway for each new feature. Thus, an upgrade may be deferred to a later, convenient time. In other embodiments, not only client 358 but also the remaining clients 354 and 356 can optionally include similar UFSP modules (such as shown in dotted line in Fig. 3 where client 354 includes UFSP module 314 and client 356 includes UFSP module 316) that enable each client to utilize new features via the auxiliary feature server to which the client's module points. In yet other embodiments, gatekeeper 352 can be installed with a UFSP module 310 (shown in dotted line in Fig. 3). UFSP modules installed within each entity would point to the auxiliary feature server so that unrecognized signaling received by a particular entity could be forwarded to the auxiliary feature server. The auxiliary feature server then could translate the unknown protocol element unrecognized by the particular entity into recognized elements supported by it.

One major feature of newer versions of communication software is the ability to transfer calls. Conventionally, if one version of the communication software operating on one of the two communicating endpoints does not have the ability to transfer then the other endpoint is limited so that it is effectively rendered incapable of transferring the call. As discussed earlier, this is because the unrecognized signaling is ignored or rejected by the endpoint lacking the transfer function, and attempting to transfer a call can result in the loss of the first call connection.

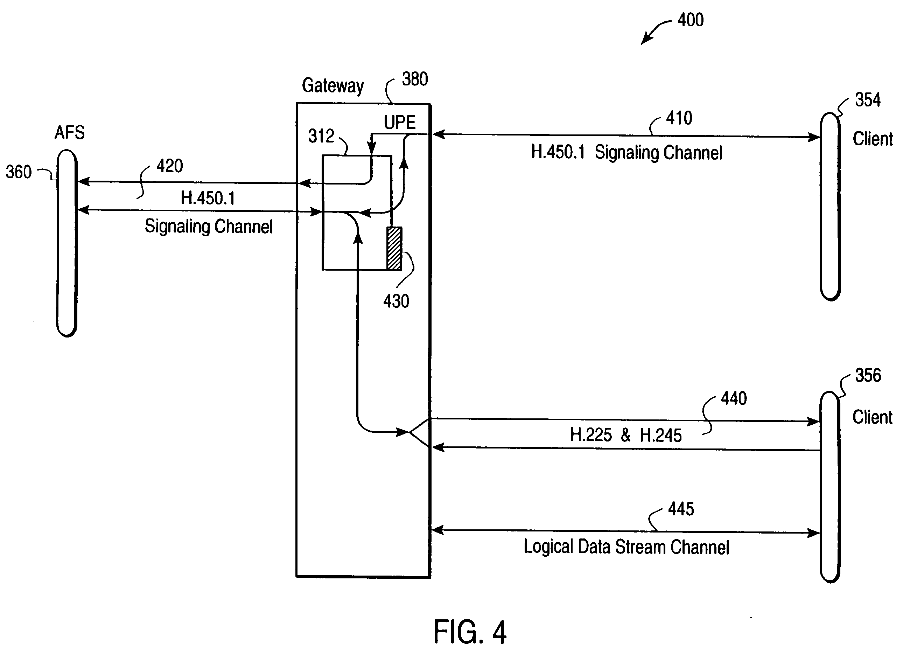

The present invention prevents the forced limiting of new capabilities or total loss of communications, though the use of an auxiliary feature server to handle the unrecognized call signaling associated with any feature that is not supported by the software operating on an endpoint. Fig. 4 illustrates an example of the operation of a specific embodiment of the present invention with respect to the call transfer feature, which is supported by one endpoint (e.g., client 354) but not by another endpoint (e.g., gateway 380).

Fig. 4 illustrates a communication process 400 for a call transfer, in accordance with specific embodiments of the present invention, that might occur at some point during a first call in progress that has already been established between gateway 380 and a client 354. In this example of Fig. 4, an incoming call from e.g., PSTN 350 (see Fig. 3) or other circuit-switched network has been received by gateway 380 and the first call established by gateway 380 to the intended recipient at client 354. To first establish the call, gateway 380 has performed steps similar to those taken by gateway 164 in Fig. 2, and client 354 has performed steps similar to those taken by client 154 in Fig. 2 (and if the system includes a gatekeeper, gatekeeper 352 has performed steps similar to those taken by gatekeeper 152 in Fig. 2). Since gatekeeper 352 is not required in a system, the present example will describe the specific embodiment of the invention for a system which does not include gatekeeper 352. However, it should be noted that if gatekeeper 352 were included, the specific steps described below would simply send the signaling between endpoints through the gatekeeper. Generally, the H.245 communications exchange information about the capabilities (e.g., communication bandwidth, whether and what type of compression will be used, quality, error correction, video compression if any, and other factors) of gateway 380 and client 354. Also in conventional systems during 1-1.245 communications, gateway 380 and client 354 would determine what version of the communication software they are operating. In conventional systems, if gateway 380 has an older version of software with fewer functions than the version of the communication software that client 354 is implementing, gateway 380 and client 354 would have agreed to operate according to the older version of the communication software.

However, in embodiments of the present invention, gateway 380 with its UFSP module 312 and client 354 can utilize many of the functions of the newer version of the communications software with the assistance of the auxiliary feature server 360, since neither gateway 380 nor client 354 necessarily needs to nor agrees to downgrade to an older set of functions related to an older version of the communications software. Auxiliary feature server 360 stores information on the capabilities of the different communication software versions that each endpoint (for which auxiliary feature server 360 is responsible) may be operating, as well as information on whether signaling for capabilities of a particular communication software version can be substantially emulated (by being broken down into basic signaling elements, as discussed further below) with the help of auxiliary feature server 360. In embodiments of the present invention, the endpoint with the oldest version of the communication software (in this example, gateway 380) checks with auxiliary feature server 360 as to whether it (in this example, gateway 380) can agree to operate with the newer version of communication software being operated by the other endpoint (in this example, client 354). Depending on whether the signaling for capabilities provided by the communication software version operating on client 354 can be broken down by auxiliary feature server 360 into basic signaling elements recognized by gateway 380, auxiliary feature server 360 as part of the initial call setup advises gateway 380 accordingly that it can or cannot agree to present itself as being able to operate a higher version of communication software.

Once the call between gateway 380 and client 354 has been established, the user of client 354 may wish to transfer the first call to another client 356. The H.450.2 communication protocol discusses the transfer operation in further detail. The user of client 354 initiates the transfer by sending gateway 380 an H.450.2 transfer request over an H.450. 1 signaling channel 410. Since this transfer request signaling is not recognized by gateway 380 which does not support this transfer function, gateway 380 passes the unrecognized signaling or unknown protocol element to its installed UFSP module 312. UFSP module 312 provides the gateway 380 with at least the IP address of auxiliary feature server 360. Then, gateway 380 opens a H.450.1 signaling channel 420 to auxiliary feature server 360 and passes the unknown protocol element to auxiliary feature server 360. Auxiliary feature server 360 can be configured for the IP addresses of the endpoints for which it is responsible. Alternatively, in systems including gatekeepers, auxiliary feature server 360 can query a gatekeeper for the IP address of the particular endpoint to which the call is to be transferred.

Upon receipt of the unknown protocol element from UFSP module 312 of gateway 380, auxiliary feature server 360 processes the unknown protocol element to break the unrecognized signaling down into atomic elements that are recognizable by the endpoint operating the version of communication software that does not support the selected function (e.g., transfer). Since gateway 380 is operating an older version of the communication software, which does not recognize call transfer, auxiliary feature server 360 and UFSP module 312 act for gateway 380 to provide the ability to effectively handle the H.450.2 communications. Auxiliary feature server 360 thus handles the unknown protocol element (the H.450.2 transfer request) sent via signaling channel 420 from gateway 380.

In particular, auxiliary feature server 360 receives the unknown protocol element associated with the transfer function and then communicates the basic elements (or primitives, such as setup call, connect call, disconnect call) approximating the transfer function (i.e., respond to the transfer request made by client 354, put the old call between gateway 380 and client 354 on hold, establish a new call between gateway 380 and client 356, then drop the old call between gateway 380 and client 354) back to gateway 380. As instructed by auxiliary feature server 360, gateway 380 (in coordination with its UFSP module 312) executes the basic elements. First, the transfer request made by client 354 is acknowledged and accepted by auxiliary feature server 360 in coordination with UFSP module 312 using known protocol elements sent over signaling channel 410 to client 354. Second, auxiliary feature server 360 instructs gateway 380/module 312 via signaling channel 420 to place on hold the first call connection between gateway 380 and client 354. Gateway 380/module 312 accordingly places the first call connection on hold. In addition, auxiliary feature server 360 via an application program interface (API) 430 to UFSP module 312 in gateway 380 alters the state machine of gateway 380 so that gateway 380 internally recognizes that the call to client 354 is on hold. Third, auxiliary feature server instructs gateway 380/module 312 via signaling channel 420 to proceed with H.225 and H.245 communications 440 to client 356. Specifically, gateway 380/module 312 sends H.225 connect request to client 356 in an attempt to communicate, and gateway 380 and client 356 (with coordination of auxiliary feature server 360) exchange H.245 communications. Upon client 356 receiving the connect request and returning a call proceeding signal, auxiliary feature server 360 instructs gateway 380/module 312 to complete the connection to client 356, and also alters via API 430 of module 312 the state machine of gateway 380 to reflect the state change from a connection to client 354 to a new connection to client 356. Fourth, after gateway 380 and client 356 have exchanged the necessary H.225/H.245 communications 440 with each other, a logical data stream channel 445 is opened between them. Fifth, auxiliary feature server 360 instructs gateway 380/module 312 to drop the first call connection between gateway 380 and client 354. Thus, the first call connection (including signaling channel 410) is closed, and the data stream of the now transferred call passes between gateway 380 and client 356. The signaling channel 420 is available for any necessary signaling that may need to be translated between gateway 380/module 312 and auxiliary feature server 360.

Therefore, in accordance with the various specific embodiments, client 354 may communicate with auxiliary feature server 360 to complete the transfer procedure without concern that gateway 380 may not possess the transfer capability. Thus, UFSP module 312 and auxiliary feature server 360 enable client 354 (operating a newer version of communication software) to work with gateway 380 (operating an old version of communication software) to transfer a call to another client 356. In previous communication systems, such transferring would not have been possible unless both gateway 830 and client 354 were operating the same version of the same communication software. Using an auxiliary feature server, the added functionality of communication devices operating newer versions of particular communication software is preserved while also allowing communication devices operating older versions of the communication software to benefit from the newer features. Advantageously, only the necessary signaling passes to auxiliary feature server while the data stream of the transferred call between endpoints does not pass through the auxiliary feature server, thereby avoiding the potential bottleneck of traffic through auxiliary feature server if the data stream did pass through it. Although the specific embodiment is described in the context of the specific function of call transferring, it should be recognized that the present invention has broader applicability to other functions that are able to be broken down into more basic elements, such that auxiliary feature server and UFSP module(s) can handle these other functions without regard to differences in communication software versions being used by network endpoints.

Since a company may have many gateways in a complex network, upgrading all of the gateways to the latest software and/or hardware to provide a new supplementary service may not always be practical or desirable. In particular, upgrading a gateway involves a potentially extended amount of time where the service provided by the gateway is shutdown, which is undesirable for real-time phone service. Also, since the clients of the network typically upgrade gradually, upgrading all the gateways may not be economical. The present invention allows puffing new services on a single auxiliary feature server that serve many gateways, thereby resulting in affordable network-wide implementation of upgraded features. When new features become more common on most of the clients in the network, then upgrading the gateways could become more feasible. Similarly, in other embodiments, auxiliary feature servers could be used to support new features for systems having PBXs or central offices that do not support these new features.

As mentioned above, in some specific embodiments, an auxiliary feature server may contain information about all the clients that the auxiliary feature server is actively servicing. This information includes the IP addresses of the clients. However, in systems where a gatekeeper is employed, this information does not need to be stored in the auxiliary feature server.

The present invention allows endpoints to communicate with each other no matter what version of communication software the endpoints are currently using. Via UFSP modules and an auxiliary feature server, each endpoint is allowed to fully utilize all the functions of their respective versions of the communication software. The present invention is not limited, however, to different versions of communication software. The auxiliary feature server cart also be used to provide support for add new features not currently specified in any standards.

## Claims

1. A method of providing compatible communication in a network including a first network entity (354) and a second network entity, said method comprising the steps of:
sending signaling associated with a selected function over said network from said first network entity (354) to said second network entity, said selected function supported by said first network entity (354);
receiving said signaling at the second network entity, said signaling not supported by and unrecognized by said second network entity; and
forwarding only said signaling from said second network entity to an auxiliary feature server (360);
translating said signaling into recognized basic signaling elements for use at said second network entity such that said selected function is substantially accomplished.

2. The method as recited in claim 1, wherein:
said forwarding step is performed by a module in said second network entity, wherein said first and second network entities comprise clients such as computers or IP telephones.

3. The method as recited in claim 2, wherein:
said forwarding step is performed by a module in said second network entity, wherein said first network entity (354) comprises a client such as a computer or JP telephone, and wherein said second network entity comprises a gateway (380).

4. The method as recited in claim 3, further comprising:
updating a state machine in said second network entity, said updating step being performed via said module (312) by said auxiliary feature server (360).

5. The method as recited in claim 3, wherein said selected function comprises call transfer.

6. The method as recited in claim 1, wherein said communication comprises H.323 communication.

7. A communication network comprising:
a first endpoint operating a first communication protocol version; a second endpoint operating a second communication protocol version,
said second communication protocol version supporting a selected function not supported by said first communication protocol version;
an auxiliary feature server (360) communicatively coupled to the first and second endpoints, wherein the auxiliary feature server receives and processes only unrecognized call signaling associated with said selected function to allow the first and second endpoints to communicate to substantially complete said selected function; and
wherein said first endpoint includes a module that recognizes and causes only said unrecognized call signaling to be forwarded to the auxiliary feature server (360) for breakdown into basic elements such that the first and second endpoints exchange communications according to said selected function.

8. The communication network as recited in claim 7, wherein said first endpoint operates a first version of a H.323 communication protocol, and said second endpoint operates a second version of the H.323 communication protocol.

9. The communication network as recited in claim 7, wherein said first and said second endpoints comprise a gateway or a client device such as a computer or an IP phone.

10. The communication network as recited in claim 7, wherein the selected function comprises call transfer.
